# EUROPÄISCHE PATENTSCHRIFT

(11) **EP 4 634 537 B1**
(45) Veröffentlichungstag und Bekanntmachung des Hinweises auf die Patenterteilung: **04.11.2026**
(21) Anmeldenummer: 23798997.5
(22) Anmeldetag: 08.11.2023
(51) Int. Cl.: F04D 29/02, F04D 29/32, F01D 5/06, F01D 5/14, F01D 5/28, B29C 45/00

(54) **ROTOR, INSBESONDERE FÜR EINE TURBOMASCHINE, VERFAHREN ZUM HERSTELLEN EINES ROTORS, TURBOMASCHINE**
ROTOR, IN PARTICULAR FOR A TURBOMACHINE, METHOD FOR PRODUCING A ROTOR, TURBOMACHINE
ROTOR, EN PARTICULIER POUR UNE TURBOMACHINE, PROCÉDÉ DE FABRICATION D'UN ROTOR, TURBOMACHINE

(30) Priorität: 14.12.2022 EP 22213338
(43) Veröffentlichungstag der Anmeldung: 22.10.2025
(73) Patentinhaber: Schubeler GmbH, 33175 Bad Lippspringe (DE)
(72) Erfinder: SCHÜBELER, Daniel, 57072 Siegen (DE); SCHNEBEL, Jesse, 57072 Siegen (DE)
(74) Vertreter: GLAWE DELFS MOLL
(86) Internationale Anmeldenummer: PCT/EP2023/081213
(87) Internationale Veröffentlichungsnummer: WO 2024/125901

(56) Entgegenhaltungen:
- EP-A1- 1 627 726
- EP-A2- 0 846 846
- EP-A2- 2 706 241
- JP-A- H09 217 601
- US-A- 4 098 559
- US-A1- 2009 068 015

## Beschreibung

Die Erfindung betrifft einen Rotor, der insbesondere zur Verwendung in einer Turbomaschine geeignet ist. Die Erfindung betrifft ein Verfahren zum Herstellen eines Rotors und eine Turbomaschine.

Turbomaschinen werden mit hohen Drehzahlen von häufig mehreren 10.000 Umdrehungen pro Minute betrieben. Bei derart hohen Drehzahlen wirken erhebliche mechanische Kräfte innerhalb des Rotors. Für den Betrieb der Turbomaschine ist es von Vorteil, wenn der Rotor trotz der einwirkenden Kräfte seine geometrische Form möglichst unverändert beibehält.

Es ist bekannt, dass ein Rotor als faserverstärktes Verbundbauteil hergestellt werden kann. In dem Verbundbauteil können Verstärkungsfasern in eine Kunststoffmatrix eingebettet sein. Verstärkungsfasern sind vor allem auf Zug belastbar. In dem Verbundbauteil sollten Verstärkungsfasern deswegen so geführt sein, dass sie entlang von im Betrieb der Turbomaschine auftretenden Zugkräften ausgerichtet sind.

Beim Herstellen eines Verbundbauteils werden üblicherweise zunächst die Verstärkungsfasern in Position gebracht und dann ein Kunststoffmaterial in flüssigem Zustand zugegeben. Das Kunststoffmaterial härtet aus und bildet die Kunststoffmatrix, in die die Verstärkungsfasern eingebettet sind.

Es kann vorkommen, dass die Verstärkungsfasern sich beim Zugeben des flüssigen Kunststoffmaterials verschieben und dann nicht mehr die gewünschte Position und Ausrichtung innerhalb der Rotornabe haben. Eine solche Verschiebung von Verstärkungsfasern kann sich nachteilig auf die Qualität des Rotors auswirken und insbesondere zur Folge haben, dass die im Betrieb der Turbomaschine wirkenden Kräfte schlechter aufgenommen werden.

Ein solcher bekannter Rotor ist beispielsweise in Dokument EP 2 706 241 A2 dargestellt.

Der Erfindung liegt die Aufgabe zugrunde, einen Rotor, ein Verfahren zum Herstellen eines Rotors und eine Turbomaschine vorzustellen, mit denen diese Probleme vermieden werden. Die Aufgabe wird gelöst mit den Merkmalen der unabhängigen Ansprüche. Vorteilhafte Ausführungsformen sind in den Unteransprüchen angegeben.

Ein erfindungsgemäßer Rotor umfasst eine Rotornabe und eine Mehrzahl von an der Rotornabe angebrachten Rotorblättern. Der Rotor umfasst eine Mehrzahl von Verstärkungsfasern, die sich von einem ersten Rotorblatt durch das Innere der Rotornabe hindurch zu einem zweiten Rotorblatt erstrecken. Im Inneren der Rotornabe ist ein erster Füllkörper angeordnet. Der erste Füllkörper hat eine Führungsfläche, mit der eine in Axialrichtung des Rotors wirkende Führung für die Verstärkungsfasern bereitgestellt wird. Der erste Füllkörper hat eine Führungsstruktur, die sich gegenüber der Führungsfläche erhebt. Die Verstärkungsfasern sind an der Führungsstruktur vorbei durch das Innere der Rotornabe hindurchgeführt.

Erfindungsgemäß werden durch die Führungsstruktur des Füllkörpers die Bereiche innerhalb der Rotornabe beschränkt, die für den Weg der Verstärkungsfasern zur Verfügung stehen. Die Führungsstruktur kann so gestaltet werden, dass die entlang der Führungsstruktur geführte Verstärkungsfasern einen Weg durch den Innenraum der Nabe nehmen, auf dem die Verstärkungsfasern wirksam in den Kraftfluss innerhalb des Rotors eingebunden sind.

Der Rotor kann so gestaltet sein, dass jedes Rotorblatt über eine Mehrzahl von Verstärkungsfasern mit wenigstens einem anderen Rotorblatt verbunden ist. Zwischen den beiden Rotorblättern, zwischen denen sich eine Verstärkungsfaser oder ein Strang von Verstärkungsfasern erstreckt, können wenigstens ein weiteres Rotorblatt, vorzugsweise wenigstens drei weitere Rotorblätter, weiter vorzugsweise wenigstens fünf weitere Rotorblätter angeordnet sein. Sind die Verstärkungsfasern nicht zu einem benachbarten, sondern zu einem gegenüberliegenden oder nahezu gegenüberliegenden Rotorblatt geführt, können Umlenkungen der Verstärkungsfasern mit engem Radius innerhalb der Rotornabe vermieden werden. Für die Übertragung von Zugkräften ist es von Vorteil, wenn der Radius, mit dem die Verstärkungsfasern innerhalb der Rotornabe umgelenkt werden, möglichst groß ist. Der Rotor kann so gestaltet sein, dass die Verstärkungsfasern sich ausgehend von einem Rotorblatt zu genau einem anderen Rotorblatt des Rotors erstrecken. Alternativ kann der Rotor auch so gestaltet sein, dass ein erster Strang von Verstärkungsfasern sich ausgehend von einem ersten Rotorblatt zu einem zweiten Rotorblatt erstreckt und dass ein zweiter Strang von Verstärkungsfasern sich ausgehend von dem ersten Rotorblatt zu einem dritten Rotorblatt erstreckt.

Durch eine Mehrzahl von Verstärkungsfasern kann eine erste Verstärkungsfaserlage gebildet werden. Die erste Verstärkungsfaserlage kann sich in einer radialen Ebene erstrecken, also einer Ebene, die senkrecht zur Axialrichtung ausgerichtet ist. Die Axialrichtung ist parallel zur Drehachse des Rotors. Der Rotor kann eine Mehrzahl von Verstärkungsfaserlagen umfassen, insbesondere wenigstens drei, vorzugsweise wenigstens vier, weiter vorzugsweise wenigstens fünf Verstärkungsfaserlagen. Die Verstärkungsfaserlagen können in Axialrichtung des Rotors hintereinander angeordnete sein. Mit anderen Worten können die Verstärkungsfaserlagen in verschiedenen axialen Abschnitten der Rotornabe angeordnet sein. Zwischen jeweils zwei benachbarten Verstärkungsfaserlagen kann ein Abstandsbereich ausgebildet sein, der frei von Verstärkungsfasern ist. Der Abstandsbereich entspricht einem axialen Abschnitt der Rotornabe, der zwischen den axialen Abschnitten der Verstärkungsfaserlagen angeordnet ist. Innerhalb einer Verstärkungsfaserlage können die Verstärkungsfasern sich kreuzen und/oder miteinander überlappen.

Die Führungsfläche des ersten Füllkörpers kann zwischen einer ersten Verstärkungsfaserlage und einer zweiten Verstärkungsfaserlage angeordnet sein, insbesondere zwischen zwei zueinander benachbarten Verstärkungsfaserlagen. Die Führungsfläche kann in einem Abstandsbereich angeordnet sein, der frei von Verstärkungsfasern ist. Der erste Füllkörper kann sich in einer radialen Ebene über den Querschnitt der Rotornabe erstrecken, sodass die erste Verstärkungsfaserlage und die zweite Verstärkungsfaserlage durch den ersten Füllkörper vollständig voneinander getrennt sind.

Die Führungsstruktur des Füllkörpers kann sich in Axialrichtung von der Führungsfläche erheben. Die Führungsstruktur kann in demselben axialen Abschnitt des Rotors angeordnet sein wie eine Verstärkungsfaserlage. Die Führungsstruktur kann die Verstärkungsfaserlage überdecken, mit anderen Worten kann eine gesamte Verstärkungsfaserlage innerhalb eines axialen Abschnitts des Rotors angeordnet sein, der von der Führungsstruktur eingenommen wird. Es gibt demnach einen axialen Abschnitt der Rotornabe, in dem sowohl die Verstärkungsfaserlage als auch die Führungsstruktur angeordnet sind, wobei die Verstärkungsfaserlage sich in den Bereichen erstreckt, die von der Führungsstruktur freigelassen ist. Durch die Führungsstruktur werden diejenigen Bereiche der Rotornabe definiert, die nicht für den Weg der Verstärkungsfasern zur Verfügung stehen. Durch die Führungsstruktur wird sichergestellt, dass die Verstärkungsfasern auch dann nicht in den Bereich der Führungsstruktur verschoben werden können, wenn das Kunststoffmaterial der Kunststoffmatrix zugegeben wird.

Die Führungsstruktur kann so gestaltet sein, dass beim Übergang der Verstärkungsfasern von dem Rotorblatt in die Rotornabe eine Umlenkung der Verstärkungsfasern mit engem Radius vermieden wird. Die Führungsstruktur kann dazu eine erste Strukturkomponente umfassen, die zwischen zwei benachbarten Rotorblättern angeordnet ist, und die vorzugsweise benachbart zu einer Mantelfläche der Rotornabe angeordnet ist. Die Führungsstruktur kann eine Mehrzahl von ersten Strukturkomponenten umfassen, sodass zwischen jedem Paar von benachbarten Rotorblättern eine erste Strukturkomponente angeordnet ist.

Es ist in der Regel nicht möglich, eine Verstärkungsfaser genau gradlinig von einem ersten Rotorblatt zu einem gegenüberliegenden zweiten Rotorblatt zu führen, weil im Zentrum der Rotornabe eine Wellenaufnahme angeordnet ist, an der die Verstärkungsfasern vorbeigeführt werden müssen. Die dafür erforderliche Krümmung des Wegs der Verstärkungsfasern ist vorzugsweise mit einem möglichst großen Radius ausgebildet. Die Führungsstruktur kann eine zweite Strukturkomponente umfassen, mit der ein geradliniger Weg von der Blattwurzel eines Rotorblatts in Richtung der Achse des Rotors gesperrt wird. Der Weg von an der zweiten Strukturkomponente vorbeigeführten Verstärkungsfasern ist in geeigneter Weise gekrümmt, sodass die Verstärkungsfasern zu einem anderen Rotorblatt geführt werden können, ohne mit der Wellenaufnahme zu kollidieren. Die zweite Strukturkomponente kann beabstandet zu der Außenseite der Wellenaufnahme und beabstandet zu der Mantelfläche der Rotornabe angeordnet sein. Sowohl zwischen der zweiten Strukturkomponente und der Wellenaufnahme als auch zwischen der zweiten Strukturkomponente und der Mantelfläche der Rotornabe können sich Verstärkungsfasern erstrecken.

Im Übergangsbereich zwischen einem Rotorblatt und der Mantelfläche der Rotornabe kann die Außenseite des Rotorblatts als gewölbte Übergangsfläche ausgebildet sein. Durch eine gewölbte Übergangsfläche kann ein abrupter Knick am Übergang zwischen dem sich im Wesentlichen radial erstreckenden Rotorblatt und der im Wesentlichen in Umfangsrichtung ausgerichteten Mantelfläche der Rotornabe vermieden werden. Durch eine solche gewölbte Übergangsfläche entsteht zusätzlicher Raum im Inneren des Rotors, in den die Verstärkungsfasern beim Zugeben des Kunststoffmaterials ausweichen könnt. Um dies zu verhindern, kann die Führungsstruktur eine dritte Strukturkomponente aufweisen, die diesen Raum ausfüllt. Die dritte Strukturkomponente kann in radialer Richtung über die Mantelfläche der Rotornabe hinausragen und sich bis in den Bereich der Blattwurzel eines Rotorblatts erstrecken. Die Führungsstruktur kann zwei solcher dritten Strukturkomponenten für ein einzelnes Rotorblatt aufweisen, sodass eine aus dem Rotorblatt austretende Verstärkungsfaser zwischen den beiden dritten Strukturkomponenten angeordnet ist. Dies kann für jedes der Rotorblätter des Rotors gelten. Die dritte Strukturkomponente kann räumlich von den anderen Strukturkomponenten der Führungsstruktur separiert sein. In einer Ausführungsform ist die dritte Strukturkomponente integral mit der ersten Strukturkomponente verbunden.

Der Füllkörper kann eine der Führungsfläche gegenüberliegende Rückseite aufweisen. Die Rückseite kann als geschlossene Fläche ausgebildet sein, die sich in einer radialen Ebene über den gesamten Querschnitt der Rotornabe erstreckt. In axialer Richtung kann die Rückseite von der Führungsfläche beabstandet sein. Der Abstand zwischen zwei zu dem Füllkörper benachbarten Verstärkungsfaserlagen ist vorzugsweise mindestens so groß wie der Abstand zwischen der Führungsfläche und der Rückseite des Füllkörpers. Der Füllkörper kann eine rundherum abgeschlossene Oberfläche haben, sodass ein Eintritt von flüssigem Kunststoffmaterial in den Innenraum des Füllkörpers nicht möglich ist. Ein großes Volumen des Füllkörpers führt dazu, dass das Gewicht des Rotors sich reduziert, weil der hohle Füllkörper eine geringere Dichte hat als das Kunststoffmaterial. Bei der Festlegung der axialen Dimension des Füllkörpers muss ein Kompromiss gefunden werden zwischen dem Gewicht und der mechanischen Stabilität des Rotors.

Der Füllkörper kann ein im Wege des 3D-Drucks hergestelltes Bauteil sein. Im Inneren der Führungsstruktur kann eine Verstärkungsstruktur ausgebildet sein, durch die die Außenflächen der Führungsstruktur mechanisch stabilisiert werden. Die Verstärkungsstruktur kann beispielsweise zwischen 5 % und 30 % des Innenvolumens der Führungsstruktur einnehmen. Abgesehen von der Verstärkungsstruktur kann der Füllkörper im Inneren hohl sein.

Der Rotor kann eine Mehrzahl solcher Füllkörper umfassen, insbesondere zwei Füllkörper, vorzugsweise drei Füllkörper, weiter vorzugsweise fünf Füllkörper. Jeder Füllkörper kann ein oder mehrere der Merkmale aufweisen, die im Zusammenhang des ersten Füllkörpers genannt sind. Die Füllkörper können in Axialrichtung hintereinander angeordnet sein, sodass jeder Füllkörper in einem anderen axialen Abschnitt der Rotornabe angeordnet ist. Der Rotor kann so gestaltet sein, dass jedem Füllkörper eine Verstärkungsfaserlage zugeordnet ist. Mit anderen Worten gibt es für jeden Füllkörper eine Verstärkungsfaserlage, die in demselben axialen Abschnitt der Rotornabe angeordnet ist wie die Führungsstruktur des Füllkörpers.

Die Führungsstruktur des Füllkörpers kann an dem der Führungsfläche gegenüberliegenden Ende offen sein, sodass die Verstärkungsfasern in die innerhalb der Führungsstruktur verbleibenden Freiräume eingelegt werden können. Nach dem Einlegen der Verstärkungsfasern kann die Führungsstruktur mit einer Abdeckung versehen werden, sodass zwischen der Führungsfläche, der Führungsstruktur und der Abdeckung geschlossene Kanäle für die Verstärkungsfasern gebildet werden. Die Abdeckung kann durch einen benachbarten Füllkörper gebildet werden. In einer Ausführungsform bildet die Rückseite der Führungsfläche eines zweiten Füllkörpers die Abdeckung für die Führungsstruktur des ersten Füllkörpers.

Jedes Rotorblatt umfasst eine Nasenleiste und eine Endleiste, die sich jeweils von der Blattwurzel bis zu einem peripheren Ende des Rotorblatts erstrecken. Die Nasenleiste und die Endleiste sind über eine saugseitige Oberfläche und eine druckseitige Oberfläche miteinander verbunden, zwischen denen der Körper des Rotorblatts eingeschlossen ist. Für die mechanischen Eigenschaften des Rotors ist es von Vorteil, wenn die Rotorblätter im Bereich der Nasenleiste und im Bereich der Endleiste durch Verstärkungsfasern verstärkt sind. Der Rotor kann so gestaltet sein, dass die Führungsstruktur eines ersten Füllkörpers in derselben axialen Ebene angeordnet ist wie die Nasenleiste der Blattwurzel eines Rotorblatts und dass die Führungsstruktur eines zweiten Füllkörpers in derselben axialen Ebene angeordnet ist wie die Endleiste der Blattwurzel des Rotorblatts. Einer der beiden Füllkörper kann eine Führungsfläche in einer axialen Ebene haben, die zwischen der Nasenleiste und der Endleiste liegt. Der andere Füllkörper kann eine Führungsfläche in einer axialen Ebene haben, die nicht zwischen der Nasenleiste und der Endleiste liegt.

Der Rotor kann ein Wellenanschluss-Bauteil umfassen, dass konzentrisch zu der Drehachse des Rotors ausgerichtet ist. Das Wellenanschluss-Bauteil kann dazu ausgelegt sein, eine mechanische Verbindung zu einer Welle einer Turbomaschine herzustellen. Auf der Außenseite des Wellenanschluss-Bauteils können dreidimensionale Strukturen ausgebildet sein, die eine innige Verbindung mit der Kunststoffmatrix des Verbundbauteils eingehen können. Auf diese Weise kann das Wellenanschluss-Bauteil mechanisch in die Struktur der Rotornabe eingebunden werden.

Die Oberfläche des Rotors kann durch eine Decklage gebildet werden, in die Verstärkungsfasern eingelassen sind. Die Verstärkungsfasern der Decklage können sich in regelmäßigen Abständen überkreuzen und beispielsweise ein kariertes Muster bilden. Mit der Längsrichtung eines Rotorblatts können die Verstärkungsfasern der Decklage beispielsweise einen Winkel zwischen 30° und 60° einschließen. Die Decklage kann die Oberfläche der Rotorblätter und/oder die Oberfläche der Rotornabe bedecken. Zu der Oberfläche der Rotornabe gehören die zwischen den Rotorblättern angeordneten Bereiche der Mantelfläche der Rotornabe sowie eine vordere Stirnfläche und eine hintere Stirnfläche. Die vordere Stirnfläche kann eine geschlossene Fläche sein. Die hintere Stirnfläche kann durch die Aufnahme für die Welle unterbrochen sein. Die Oberfläche des Rotors kann ganz oder teilweise mit der Decklage bedeckt sein. Die Verstärkungsfasern oder Stränge von Verstärkungsfasern, die sich von einem Rotorblatt durch die Rotornabe hindurch zu einem anderen Rotorblatt erstrecken, können im Bereich der Rotorblätter an die Decklage angrenzen.

Eine Turbomaschine im Sinne der Erfindung ist eine Maschine, mit der eine Strömung eines Fluids, insbesondere eine Luftströmung, durch Rotation eines Rotors angetrieben wird. Der Rotor hat Rotorblätter, die so geformt sind, dass durch die aus der Rotation resultierende Umströmung eine Druckdifferenz zwischen der Vorderseite und der Rückseite der Rotorblätter entsteht. Beispiele für Turbomaschinen sind Propellermaschinen, bei denen die Rotorblätter sich im freien Raum bewegen, und Impellermaschinen, bei denen die Rotorblätter im Inneren eines Impellergehäuses angeordnet sind.

Eine erfindungsgemäße Turbomaschine umfasst einen Motor und einen erfindungsgemäß ausgebildeten Rotor. Der Rotor ist an eine von einem Motor angetriebene Welle angeschlossen. Mit dem Motor wird eine Strömung des Fluids angetrieben, in dem der Rotor sich dreht.

Die Erfindung betrifft weiter eine Impellermaschine mit einem Impellergehäuse, einem Motorgehäuse, einem in dem Motorgehäuse angeordneten Motor und einem zwischen dem Impellergehäuse und dem Motorgehäuse eingeschlossenen Ringraum. Der erfindungsgemäße Rotor ist an eine von dem Motor angetriebene Welle angeschlossen, so dass mit dem Rotor ein Luftstrom entlang des Ringraums erzeugt werden kann. Eine Impellermaschine im Sinne der Erfindung ist eine Axial-Strömungsmaschine. Der mit dem Rotor angetriebene Luftstrom hat eine Strömungsrichtung, die parallel zu der Achse des Rotors ist. Die Rotorblätter des Rotors, die bezogen auf die Achse in demselben radialen Abschnitt angeordnet sind wie der zwischen dem Impellergehäuse und dem Motorgehäuse angeordnete Ringraum.

Die Erfindung betrifft auch ein Verfahren zum Herstellen eines Rotors mit einer Rotornabe und einer Mehrzahl von an der Rotornabe angebrachten Rotorblättern. Bei dem Verfahren wird ein erster Füllkörper in ein Formbauteil eingebracht wird, wobei das Formbauteil dazu ausgelegt ist, einen der Form des Rotors entsprechenden Formhohlraum zu begrenzen. Der erste Füllkörper hat eine Führungsfläche, mit der eine in Axialrichtung des Rotors wirkende Führung bereitgestellt wird, und eine Führungsstruktur, die sich gegenüber der Führungsfläche erhebt. Eine Mehrzahl von Verstärkungsfasern wird in die Führungsstruktur des ersten Füllkörpers eingelegt, so dass jede Verstärkungsfaser sich von einem ersten Rotorblatt durch die Führungsstruktur hindurch zu einem zweiten Rotorblatt erstreckt.

Bei dem Verfahren können ein erstes Formbauteil und ein zweites Formbauteil verwendet werden, die in einem ersten Zustand voneinander getrennt sind und die in einem zweiten Zustand miteinander verbunden sind. Im verbundenen Zustand umschließen die Formbauteile den Formhohlraum. Die aus den beiden Formbauteilen gebildete Form kann eine Mehrzahl von Einsatzstücken umfassen, um ein Trennen der Formbauteile auch dann zu ermöglichen, wenn der Rotor Hinterschneidungen aufweist. In einer Ausführungsform ist jedem Rotorblatt ein Einsatzstück zugeordnet.

Zu Beginn des Herstellungsvorgang können die Formbauteile getrennt voneinander vorliegen. Die Flächen der Formbauteile, die der späteren Oberfläche des Rotors entsprechen, können mit der Decklage belegt werden. In den Bereich eines Formbauteils, der dem Inneren der Rotornabe entspricht, kann ein erster Füllkörper eingelegt werden, sodass die Rückseite des Füllkörpers zu dem Formbauteil weist und dass die Führungsstruktur zugänglich ist. Es können Verstärkungsfasern oder Stränge von Verstärkungsfasern in das Formbauteil eingelegt werden, sodass die Verstärkungsfasern oder Stränge von Verstärkungsfasern im Bereich der Rotorblätter an der Decklage haften und im Bereich der Rotornabe entlang der Führungsstruktur geführt sind. Die in die Führungsstruktur des ersten Füllkörpers eingelegten Verstärkungsfasern können eine erste Verstärkungsfaserlage bilden. Es kann ein zweiter Füllkörper in das Formbauteil eingelegt werden, sodass die Rückseite des zweiten Füllkörpers die Führungsstruktur des ersten Füllkörpers abdeckt und dass die erste Verstärkungsfaserlage zwischen der Führungsfläche des ersten Füllkörpers, der Führungsstruktur des ersten Füllkörpers und der Rückseite des zweiten Füllkörpers eingeschlossen ist. In die Führungsstruktur des zweiten Füllkörpers kann eine zweite Verstärkungsfaserlage eingelegt werden. Dieser Aufbau kann mit weiteren Füllkörpern, beispielsweise einem dritten Füllkörper, einem vierten Füllkörper und/oder einem fünften Füllkörper fortgesetzt werden. In das erste Formbauteil und das zweite Formbauteil kann weiter ein Wellenanschluss-Bauteil eingelegt werden. Das erste Formbauteil und das zweite Formbauteil können zusammengesetzt werden, sodass der der Form des Rotors entsprechende Formhohlraum gebildet wird. Ein in flüssigem Zustand in den Formhohlraum eingebrachtes Kunststoffmaterial kann aushärten und die Kunststoffmatrix eines Verbundbauteils bildet. Das Verbundbauteil hat die Form des Rotors. Das flüssige Kunststoffmaterial kann vor oder nach dem Zusammensetzen des ersten Formbauteils und des zweiten Formbauteils in den Formhohlraum eingebracht werden. Die Offenbarung umfasst Weiterbildungen des erfindungsgemäßen Verfahrens mit ein oder mehreren der in diesem Absatz genannten Merkmale.

Die Offenbarung umfasst Weiterbildungen des Verfahrens mit Merkmalen, die im Zusammenhang des erfindungsgemäßen Rotors beschrieben sind. Die Offenbarung umfasst Weiterbildungen des Rotors, die im Zusammenhang des erfindungsgemäßen Verfahrens beschrieben sind.

Die Erfindung wird nachfolgend unter Bezugnahme auf die beigefügten Zeichnungen anhand vorteilhafter Ausführungsformen beispielhaft beschrieben. Es zeigen:
- Fig. 1:: eine Ausführungsform einer erfindungsgemäßen Turbomaschine;
- Fig. 2:: eine perspektivische Darstellung eines erfindungsgemäßen Rotors;
- Fig. 3:: einen Schnitt in Axialrichtung durch den Rotor aus Fig. 2;
- Fig. 4:: einen Schnitt in einer ersten radialen Ebene durch den Rotor aus Fig. 2;
- Fig. 5:: einen Schnitt in einer zweiten radialen Ebene durch den Rotor aus Fig. 2;
- Fig. 6:: eine Mehrzahl von hintereinander angeordneten Füllkörpern;
- Fig. 7:: einen Ausschnitt eines Füllkörpers in einer Schnittdarstellung.

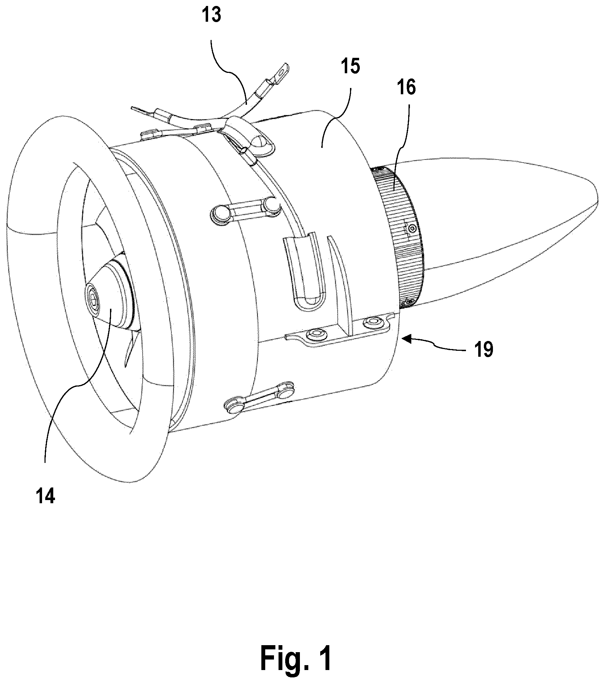

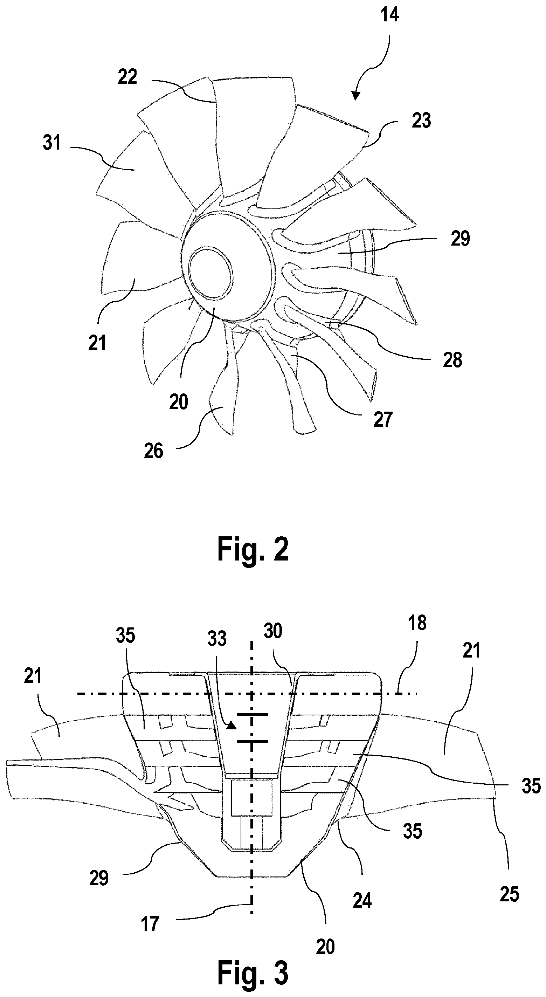

Eine erfindungsgemäße Turbomaschine in Form einer Impellermaschine umfasst gemäß Fig. 1 einen Rotor 14, der in einem Impellergehäuse 15 angeordnet ist. In einem Innenraum des Impellergehäuses 15 ist Motorgehäuse 16 gehalten, in dessen Innerem ein elektrischer Motor angeordnet ist. Der elektrische Motor treibt eine Welle an, so dass der mit der Welle verbundene Rotor 14 um eine Achse 17 rotiert, siehe Fig. 3. Der Motor wird über elektrische Anschlüsse 13 mit Energie versorgt. Eine zu der Achse 17 senkrechte Richtung wird als Radialrichtung, eine zur Axialrichtung 17 senkrechte Ebene als radiale Ebene 18 bezeichnet.

In einem Ringraum 19, der radial außerhalb des Motorgehäuses 16 und radial innerhalb des Impellergehäuses 15 eingeschlossen ist, ist eine Mehrzahl von Streben ausgebildet, mit denen das Motorgehäuse 16 relativ zu dem Impellergehäuse 15 in Position gehalten wird. Der Rotor 14 umfasst eine Mehrzahl von Rotorblättern 21, die an einem vorderen Ende des Ringraums 19 umlaufen. Durch die Drehung des Rotors 14 wird ein Luftstrom erzeugt, der sich ausgehend von dem Rotor 14 durch den Ringraum 19 hindurch bis zum entgegengesetzten, hinteren Ende der Impellermaschine erstreckt.

Eine Impellermaschine im Sinne der Erfindung ist eine Axial-Strömungsmaschine mit hohem Wirkungsgrad, die im Cordier-Diagramm eine Laufzahl σ zwischen 1,8 und 10 und eine Durchmesserzahl δ zwischen 0,8 und 1,5 hat. Von Radial-Strömungsmaschinen mit hohem Wirkungsgrad unterscheidet sich die erfindungsgemäße Impellermaschine durch einen höheren Wert für die Laufzahl σ und einen niedrigeren Wert für die Durchmesserzahl δ. Von mantellosen Propellermaschinen unterscheidet sich die erfindungsgemäße Impellermaschine durch einen niedrigeren Wert für Laufzahl σ und einen höheren Wert für die Durchmesserzahl δ.

Ein erfindungsgemäßer Rotor 14 umfasst gemäß Fig. 2, 3 eine Rotornabe 20 mit einer Mantelfläche 29, an der eine Mehrzahl von Rotorblättern 21 angebracht ist. Jedes Rotorblatt 21 erstreckt sich von einer an die Rotornabe 20 angrenzenden Blattwurzel 24 bis zu einem peripheren Ende 25. Im Betrieb der Impellermaschine hat das periphere in 25 des Rotorblatts 21 einen sehr kleinen Abstand zur Innenwand des Impellergehäuses 15. Jedes Rotorblatt 21 hat eine Nasenleiste 22, die im Betrieb der Impellermaschine von der einfallenden Luftströmung getroffen wird sowie eine der Nasenleiste 22 gegenüberliegende Endleiste 23. Eine saugseitige Außenfläche 26 und eine druckseitige Außenfläche 27 erstrecken sich zwischen der Nasenleiste 22 und der Endleiste 23. Der Übergang zwischen der Blattwurzel 24 und der Mantelfläche 29 der Rotornabe 20 wird durch eine abgerundete Übergangsfläche 28 gebildet.

Im Inneren der Rotornabe 20 und koaxial zu der Achse 17 des Rotors 14 ist ein aus Aluminium bestehendes Wellenanschluss-Bauteil 30 angeordnet, über das der Rotor 14 an die Welle der Impellermaschine angeschlossen wird. Das Wellenanschluss-Bauteil 30 bildet einen Teil der Oberfläche des Rotors. Der verbleibende Teil der Rotor-Oberfläche wird durch eine Decklage 31 eines Verbundwerkstoffs gebildet.

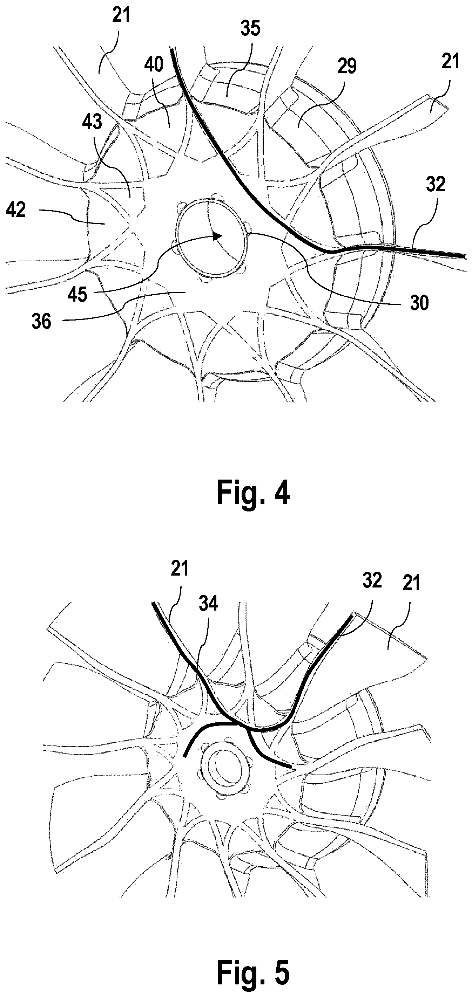

Im Inneren des Rotors 14 ist eine Vielzahl von Verstärkungsfasern angeordnet, die sich von einem ersten Rotorblatt 21 bis zu einem zweiten Rotorblatt 21 erstrecken. In Fig. 4 ist ein einzelner Strang von Verbundfasern 32 dargestellt, der beispielhaft für eine Vielzahl von Strängen von Verstärkungsfasern 32 steht, die in diesem axialen Abschnitt 33 des Rotors 14 angeordnet sind. Gemeinsam bilden die Verstärkungsfasern 32 dieses axialen Abschnitts 33 eine Verstärkungsfaserlage 34. Eine Verstärkungsfaserlage 34 ist in Fig. 5 anhand der in einem anderen axialen Abschnitt 33 des Rotors 14 angeordneten Verstärkungsfasern 32 angedeutet.

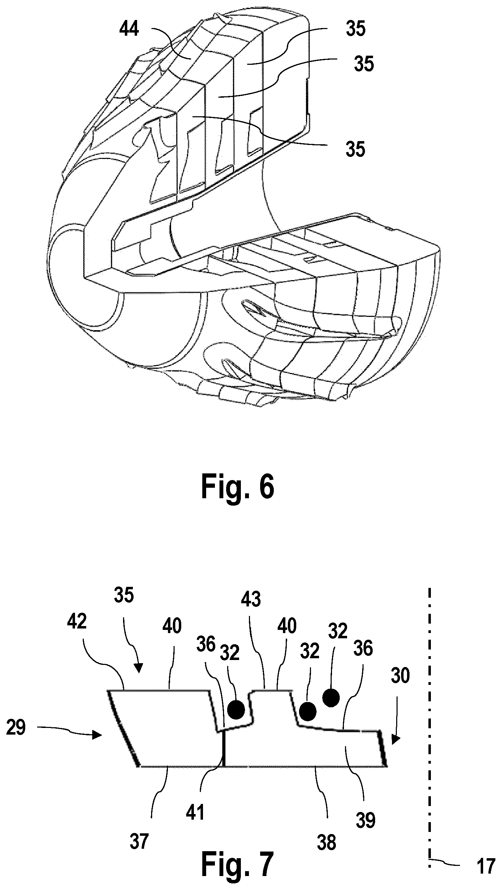

Das Innere der Rotornabe 20 umfasst eine Mehrzahl von Füllkörpern 35, die in Axialrichtung 17 des Rotors 14 hintereinander angeordnet sind, siehe Fig. 3. Ein auf diese Weise entstehender Stapel von Füllkörpern 35 ist in Fig. 6 dargestellt. Die Fig. 7 zeigt einen zwischen der Mantelfläche 29 der Rotornabe 20 und dem Wellenanschluss-Bauteil 30 angeordneten Ausschnitt eines Füllkörpers 35 in einer Schnittdarstellung. Der Füllkörper 35 hat eine Führungsfläche 36, die in Axialrichtung 17 eine Führung für die Verstärkungsfasern 32 bietet. Der Füllkörper 35 hat ferner eine Führungsstruktur 40, die sich gegenüber der Führungsfläche 36 erhebt. Durch die Führungsstruktur 40 werden Abschnitte innerhalb einer radialen Ebene 18 definiert, die nicht für die Verstärkungsfasern 32 zur Verfügung stehen. Die Verstärkungsfasern 32 erstrecken sich in den Freiräumen, die innerhalb der Führungsstruktur 40 verbleiben. Die Freiräume sind so gestaltet, dass die Verstärkungsfasern 32 in die Freiräume eingelegt werden können, ohne mit engem Radius umgelenkt zu werden.

Der Füllkörper 35 ist mit einer geschlossenen Außenwand 38 umschlossen. Der Innenraum 39 des Füllkörpers 35 ist im Wesentlichen hohl, sodass der Füllkörper 35 ein möglichst geringes Gewicht hat. Es ist lediglich eine Verstärkungsstruktur 41 im Innenraum des Füllkörpers 35 ausgebildet, die in Fig. 7 schematisch dargestellt ist. Die Verstärkungsstruktur 41 nimmt zwischen 10 % und 20 % des Volumens im Innenraum des Füllkörpers 35, im Übrigen ist der Füllkörper 35 hohl. Die der Führungsfläche 36 gegenüberliegende Fläche wird als Rückseite 37 des Füllkörpers 35 bezeichnet. Die Rückseite 37 ist von der Führungsfläche 36 beabstandet, sodass die Füllkörper 35 ein hohes Volumen und eine geringe Dichte haben. Dies trägt dazu bei, das Gewicht des Rotors 14 niedrig zu halten.

Wie in Fig. 4 gezeigt, umfasst die Führungsstruktur 40 des Füllkörpers 35 eine Mehrzahl von ersten Strukturkomponenten 42 sowie eine Mehrzahl von zweiten Strukturkomponenten 43. Die ersten Strukturkomponenten 42 sind jeweils zwischen zwei Rotorblättern 21 angeordnet und stellen sicher, dass die Verstärkungsfasern 32 im Bereich der Blattwurzel 24 nicht mit engem Radius umgelenkt werden. Die zweiten Strukturkomponenten 43 sind in Verlängerung der Rotorblätter 21 angeordnet und stellen sicher, dass die Verstärkungsfasern 32 an dem Wellenanschluss-Bauteil 30 vorbeigeführt werden. Darüber hinaus umfassen die Füllkörper 35 dritte Strukturkomponenten 44, die über die Mantelfläche der Rotornabe hinaus in den Bereich der Blattwurzel 24 eines Rotorblatts 21 ragen. Im vorliegenden Ausführungsbeispiel sind die dritten Strukturkomponenten 44 integral mit den ersten Strukturkomponenten 42 verbunden.

Für die Herstellung eines solchen Rotors werden zwei Formbauteile bereitgestellt, die dazu ausgelegt sind, zwischen sich einen der Form des Rotors 14 entsprechenden Hohlraum einzuschließen, wenn sie zusammengesetzt sind. Um ein Entformen zu ermöglichen, können die Formbauteile mit der erforderlichen Anzahl von Einsatzstücken versehen sein. In einem Zustand, in dem die Formbauteile getrennt voneinander sind, werden die Bereiche der Formbauteile, die der Oberfläche des Rotors 14 entsprechen, mit einer Decklage 31 belegt. Ein erster Füllkörper 35 wird in eines der Formbauteile eingelegt, sodass die Rückseite 37 des Füllkörpers zu dem Formbauteil weist und dass die Führungsstruktur 40 des Füllkörpers 35 zugänglich ist. Stränge von Verstärkungsfasern 32 werden in das Formbauteil eingelegt, sodass die Verstärkungsfasern 32 sich von einem ersten Rotorblatt 21 über die Freiräume der Führungsstruktur 40 zu einem zweiten Rotorblatt 21 erstrecken. Dies wird mit einer ausreichenden Anzahl von Verstärkungsfasern 32 durchgeführt, sodass eine erste Verstärkungsfaserlage 34 gebildet wird, die in einem axialen Abschnitt des Rotors 33 angeordnet ist. Ein zweiter Füllkörper 35 wird mit seiner Rückseite 37 auf den ersten Füllkörper 35 aufgelegt, sodass die erste Verstärkungsfaserlage 34 rundherum eingeschlossen ist. Dies wird mit weiteren Füllkörpern 35 und Verstärkungsfaserlagen 34 fortgeführt, bis im Inneren der Nabe 20 eine Mehrzahl von Verstärkungsfaserlagen 34 ausgebildet ist, die in zueinander parallelen axialen Abschnitten der Nabe 20 angeordnet sind.

Die Formbauteile 35 umschließen eine zentrale Öffnung 45, in die das Wellenanschluss-Bauteil 30 eingesetzt wird. Die beiden Formbauteile werden zusammengesetzt. Ein Kunststoffmaterial, das in flüssigem Zustand in den Hohlraum eingebracht wird, härtet aus und bildet die Kunststoffmatrix des Verbundbauteils.

## Patentansprüche

1. Rotor, insbesondere für eine Turbomaschine, umfassend eine Rotornabe (20) und eine Mehrzahl von an der Rotornabe (20) angebrachten Rotorblättern (21), mit einer Mehrzahl von Verstärkungsfasern (32), wobei jede Verstärkungsfaser (32) sich von einem ersten Rotorblatt (21) durch das Innere der Rotornabe (20) hindurch zu einem zweiten Rotorblatt (21) erstreckt, der Rotor ist **dadurch gekennzeichnet, dass** im Inneren der Rotornabe (20) ein erster Füllkörper (35) angeordnet ist, wobei der erste Füllkörper (35) eine Führungsfläche (36) aufweist, mit der eine in Axialrichtung des Rotors wirkende Führung für die Verstärkungsfasern (32) bereitgestellt wird, wobei der erste Füllkörper (35) eine Führungsstruktur (40) aufweist, die sich gegenüber der Führungsfläche (36) erhebt, und wobei die Verstärkungsfasern (32) an der Führungsstruktur (36) vorbei durch das Innere der Rotornabe (20) hindurchgeführt sind.

2. Rotor nach Anspruch 1, wobei durch eine Mehrzahl von Verstärkungsfasern (32) eine erste Verstärkungsfaserlage (34) gebildet wird, die in einer radialen Ebene (18) der Rotornabe (20) angeordnet ist.

3. Rotor nach Anspruch 2, wobei die Führungsstruktur (40) des ersten Füllkörpers (35) in demselben axialen Abschnitt (33) der Rotornabe (20) angeordnet ist wie erste Verstärkungsfaserlage (34).

4. Rotor nach Anspruch 2 oder 3, mit einer ersten Verstärkungsfaserlage (34) und einer zweiten Verstärkungsfaserlage (34), wobei die Führungsfläche (36) des ersten Füllkörpers (35) zwischen der ersten Verstärkungsfaserlage (34) und der zweiten Verstärkungsfaserlage (34) angeordnet ist.

5. Rotor nach einem der Ansprüche 1 bis 4, wobei die Führungsstruktur (40) eine erste Strukturkomponente (42) umfasst, die benachbart zu einer Mantelfläche (29) der Rotornabe (20) sowie zwischen zwei benachbarten Rotorblättern (21) angeordnet ist.

6. Rotor nach einem der Ansprüche 1 bis 5, wobei die Führungsstruktur (40) eine zweite Strukturkomponente (43) umfasst, die einen geradlinigen Weg zwischen der Blattwurzel (24) eines Rotorblatts (21) und der Achse (17) des Rotors versperrt.

7. Rotor nach einem der Ansprüche 1 bis 6, wobei die Führungsstruktur (40) eine dritte Strukturkomponente (44) umfasst, die über die Mantelfläche (29) der Rotornabe (20) hinausragt und sich bis in den Bereich der Blattwurzel (24) eines Rotorblatts (21) erstreckt.

8. Rotor nach einem der Ansprüche 1 bis 7, wobei der erste Füllkörper (35) einen Hohlraum aufweist, der zwischen der Führungsfläche (36) und einer in Axialrichtung von der Führungsfläche (36) beabstandeten Rückseite (37) des ersten Füllkörpers (35) angeordnet ist.

9. Rotor nach Anspruch 8, wobei der erste Füllkörper (35) eine rundherum abgeschlossene Oberfläche hat.

10. Rotor nach einem der Ansprüche 1 bis 9, mit einem ersten Füllkörper (35) und einem zweiten Füllkörper, wobei die Führungsstruktur (40) des ersten Füllkörpers (35) durch den zweiten Füllkörper abgedeckt ist.

11. Turbomaschine mit einem Motor und mit einem Rotor (14), wobei der Rotor (14) an eine von dem Motor angetriebene Welle angeschlossen ist und wobei der Rotor (14) nach einem der Ansprüche 1 bis 10 ausgebildet ist.

12. Verfahren zum Herstellen eines Rotors mit einer Rotornabe (20) und einer Mehrzahl von an der Rotornabe (20) angebrachten Rotorblättern (21), bei dem ein erster Füllkörper (35) in ein Formbauteil eingebracht wird, wobei das Formbauteil dazu ausgelegt ist, einen der Form des Rotors entsprechenden Formhohlraum zu begrenzen, wobei der erste Füllkörper (35) eine Führungsfläche (36) aufweist, mit der eine in Axialrichtung des Rotors wirkende Führung bereitgestellt wird, und wobei der erste Füllkörper (35) eine Führungsstruktur (40) aufweist, die sich gegenüber der Führungsfläche (36) erhebt, und bei dem eine Mehrzahl von Verstärkungsfasern (32) in die Führungsstruktur (40) des ersten Füllkörpers eingelegt wird, so dass jede Verstärkungsfaser (32) sich von einem ersten Rotorblatt (21) durch die Führungsstruktur (40) hindurch zu einem zweiten Rotorblatt (21) erstreckt.

## Claims

1. Rotor, in particular for a turbomachine, comprising a rotor hub (20) and a plurality of rotor blades (21) attached to the rotor hub (20), with a plurality of reinforcing fibres (32), wherein each reinforcing fibre (32) extends from a first rotor blade (21) through the interior of the rotor hub (20) to a second rotor blade (21), the rotor is **characterized in that** a first filler body (35) is arranged inside the rotor hub (20), wherein the first filler body (35) has a guide surface (36) with which a guide for the reinforcing fibres (32) acting in the axial direction of the rotor is provided, wherein the first filler body (35) has a guide structure (40) which rises up opposite the guide surface (36), and wherein the reinforcing fibres (32) are guided past the guide structure (36) through the inside of the rotor hub (20).

2. Rotor according to Claim 1, wherein a first reinforcing fibre layer (34) is formed by a plurality of reinforcing fibres (32), which first reinforcing fibre layer is arranged in a radial plane (18) of the rotor hub (20).

3. Rotor according to Claim 2, wherein the guide structure (40) of the first filler body (35) is arranged in the same axial portion (33) of the rotor hub (20) as the first reinforcing fibre layer (34).

4. Rotor according to Claim 2 or 3, with a first reinforcing fibre layer (34) and a second reinforcing fibre layer (34), wherein the guide surface (36) of the first filler body (35) is arranged between the first reinforcing fibre layer (34) and the second reinforcing fibre layer (34).

5. Rotor according to one of Claims 1 to 4, wherein the guide structure (40) comprises a first structural component (42) arranged adjacent to a lateral surface (29) of the rotor hub (20) and between two adjacent rotor blades (21).

6. Rotor according to one of Claims 1 to 5, wherein the guide structure (40) comprises a second structural component (43) blocking a rectilinear path between the blade root (24) of a rotor blade (21) and the axis (17) of the rotor.

7. Rotor according to one of Claims 1 to 6, wherein the guide structure (40) comprises a third structural component (44) which projects beyond the lateral surface (29) of the rotor hub (20) and extends into the region of the blade root (24) of a rotor blade (21).

8. Rotor according to one of Claims 1 to 7, wherein the first filler body (35) has a cavity arranged between the guide surface (36) and a rear side (37) of the first filler body (35) spaced apart from the guide surface (36) in the axial direction.

9. Rotor according to Claim 8, wherein the first filler body (35) has an all-round sealed surface.

10. Rotor according to one of Claims 1 to 9, with a first filler body (35) and a second filler body, wherein the guide structure (40) of the first filler body (35) is covered by the second filler body.

11. Turbomachine with a motor and with a rotor (14), wherein the rotor (14) is connected to a shaft driven by the motor, and wherein the rotor (14) is designed according to one of Claims 1 to 10.

12. Method for producing a rotor with a rotor hub (20) and a plurality of rotor blades (21) attached to the rotor hub (20), in which a first filler body (35) is introduced into a mould component, wherein the mould component is designed to define a mould cavity corresponding to the shape of the rotor, wherein the first filler body (35) has a guide surface (36) with which a guide acting in the axial direction of the rotor is provided, and wherein the first filler body (35) has a guide structure (40) which rises up opposite the guide surface (36), and in which a plurality of reinforcing fibres (32) are inserted into the guide structure (40) of the first filler body so that each reinforcing fibre (32) extends from a first rotor blade (21) through the guide structure (40) to a second rotor blade (21).

## Revendications

1. Rotor, en particulier pour une turbomachine, comprenant un moyeu (20) de rotor et une multitude de pales (21) de rotor fixées au moyeu (20) de rotor, avec une multitude de fibres de renfort (32), chaque fibre de renfort (32) s'étendant depuis une première pale (21) de rotor jusqu'à une deuxième pale (21) de rotor en passant par l'intérieur du moyeu (20) de rotor, **caractérisé en ce qu'**un premier corps de remplissage (35) est disposé à l'intérieur du moyeu (20) de rotor, le premier corps de remplissage (35) comportant une surface de guidage (36) avec laquelle est fourni un guidage agissant dans la direction axiale du rotor pour les fibres de renfort (32), le premier corps de remplissage (35) comportant une structure de guidage (40), qui s'élève par rapport à la surface de guidage (36), et les fibres de renfort (32) étant guidées le long de la structure de guidage (36) à travers l'intérieur du moyeu (20) de rotor.

2. Rotor selon la revendication 1, une première couche de fibres de renfort (34) étant formée par une multitude de fibres de renfort (32), laquelle est disposée dans un plan radial (18) du moyeu (20) de rotor.

3. Rotor selon la revendication 2, la structure de guidage (40) du premier corps de remplissage (35) étant disposée dans la même section axiale (33) du moyeu (20) de rotor que la première couche de fibres de renfort (34).

4. Rotor selon la revendication 2 ou 3, avec une première couche de fibres de renfort (34) et une deuxième couche de fibres de renfort (34), la surface de guidage (36) du premier corps de remplissage (35) étant disposée entre la première couche de fibres de renfort (34) et la deuxième couche de fibres de renfort (34).

5. Rotor selon l'une des revendications 1 à 4, la structure de guidage (40) comprenant un premier composant (42) de structure, qui est disposé de manière adjacente à une surface extérieure (29) du moyeu (20) de rotor ainsi qu'entre deux pales (21) de rotor adjacentes.

6. Rotor selon l'une des revendications 1 à 5, la structure de guidage (40) comprenant un deuxième composant (43) de structure, qui bloque un trajet rectiligne entre le pied (24) de pale d'une pale (21) de rotor et l'axe (17) du rotor.

7. Rotor selon l'une des revendications 1 à 6, la structure de guidage (40) comprenant un troisième composant (44) de structure, qui s'étend au-delà de la surface extérieure (29) du moyeu (20) de rotor et s'étend jusque dans la zone du pied (24) de pale d'une pale (21) de rotor.

8. Rotor selon l'une des revendications 1 à 7, le premier corps de remplissage (35) comportant une cavité qui est disposée entre la surface de guidage (36) et un côté arrière (37), espacé dans la direction axiale de la surface de guidage (36), du premier corps de remplissage (35).

9. Rotor selon la revendication 8, le premier corps de remplissage (35) ayant une surface fermée tout autour.

10. Rotor selon l'une des revendications 1 à 9, avec un premier corps de remplissage (35) et un deuxième corps de remplissage, la structure de guidage (40) du premier corps de remplissage (35) étant recouverte par le deuxième corps de remplissage.

11. Turbomachine avec un moteur et avec un rotor (14), le rotor (14) étant raccordé à un arbre entraîné par le moteur et le rotor (14) étant formé selon l'une des revendications 1 à 10.

12. Procédé de fabrication d'un rotor avec un moyeu (20) de rotor et une multitude de pales (21) de rotor fixées au moyeu (20) de rotor, dans lequel un premier corps de remplissage (35) est introduit dans un élément de moulage, l'élément de moulage étant conçu pour limiter une cavité de moulage correspondant à la forme du rotor, le premier corps de remplissage (35) comportant une surface de guidage (36) avec laquelle est fourni un guidage agissant dans la direction axiale du rotor, et le premier corps de remplissage (35) comportant une structure de guidage (40) qui s'élève par rapport à la surface de guidage (36), et dans lequel une multitude de fibres de renfort (32) est insérée dans la structure de guidage (40) du premier corps de remplissage, de telle sorte que chaque fibre de renfort (32) s'étend depuis une première pale (21) de rotor jusqu'à une deuxième pale (21) de rotor en passant par la structure de guidage (40).
